Europäisches Patentamt

European Patent Office

Office européen des brevets

(11) Veröffentlichungsnummer: **0 176 015**
**B1**

(12) # EUROPÄISCHE PATENTSCHRIFT

(45) Veröffentlichungstag der Patentschrift:
**24.05.89**

(51) Int. Cl.⁴: **H 04 L 25/49,** H 04 B 17/02

(21) Anmeldenummer: **85111643.4**

(22) Anmeldetag: **14.09.85**

(54) **Verfahren zur zusätzlichen Uebertragung von Informationen über einen digitalen Hilfskanal sowie Anwendung des Verfahrens.**

(30) Priorität: **28.09.84 CH 4669/84**

(43) Veröffentlichungstag der Anmeldung:
**02.04.86 Patentblatt 86/14**

(45) Bekanntmachung des Hinweises auf die Patenterteilung:
**24.05.89 Patentblatt 89/21**

(84) Benannte Vertragsstaaten:
**CH DE FR GB IT LI NL SE**

(56) Entgegenhaltungen:
**EP-A- 0 090 728**
**DE-A- 3 213 022**
**FR-A- 2 535 556**
**US-A- 4 215 245**

**PATENTS ABSTRACTS OF JAPAN, Band 7, Nr. 247, 2. November 1983, Seite 82 E 208; & JP - A - 58 134 562**

(73) Patentinhaber: **BBC Brown Boveri AG, Haselstrasse, CH-5401 Baden (CH)**

(72) Erfinder: **Tanson, Patrick, Zürichbergstrasse 132, CH-8044 Zürich (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft ein Verfahren zur zusätzlichen Übertragung von Informationen über einen digitalen Hilfskanal gemäss dem Oberbegriff des Anspruchs 1 sowie eine Anwendung des Verfahrens. Ein solches Verfahren ist z.B. aus der FR-A 2 535 556 bekannt. Die Anwendung des Verfahrens bezieht sich auf ein optisches Übertragungssystem, wie es im telcom report 6 (1983), Beiheft «Nachrichtenübertragung mit Licht», S. 127–132 beschrieben ist.

Auf dem Gebiet der leitungsgebundenen Digitalsignalübertragung, z.B. der PCM-Übertragung in Fernsprechkanälen, gewinnt der Einsatz von Lichtwellenleitern wegen der damit zur Verfügung stehenden grossen Bandbreite zunehmend an Bedeutung.

Der Ersatz von elektrischen Leitern durch optische Lichtwellenleiter bezieht sich dabei zunächst auf den Hauptübertragungspfad, über den die anstehenden Daten von einer Station zur nächsten übertragen werden. Neben dem Hauptübertragungspfad werden jedoch auch Hilfs- und Dienstkanäle benötigt, um den Betrieb des Leitungsnetzes zu steuern und zu überwachen und gegebenenfalls Befehle oder Alarme weiterzuleiten. Solche Hilfskanäle werden bei den üblichen elektrischen Koaxialleitungssystemen durch zusätzliche Leiterpaare parallel zu den Koaxialleitungen verwirklicht.

Eine Übertragung dieses Prinzips des getrennt aufgebauten Hilfskanals auf die Technik der Lichtwellenleiter führt entweder zu der Kombination eines Lichtwellenleiters (Hauptübertragungspfad) mit einem elektrischen Leiterpaar (Hilfskanal) oder zu einer Mehrzahl von Lichtwellenleitern mit getrennten Aufgaben.

Beide Lösungen sind wegen der zusätzlich benötigten Leiter kostenungünstig. Bei der ersten Lösung werden durch den Einsatz des elektrischen Leiterpaars die bei optischen Fasern vorteilhafte Störsicherheit und galvanische Trennung eingebüsst. Bei der zweiten Lösung wird Kanalkapazität verschwendet, weil die hohe Übertragungskapazität eines Lichtwellenleiters durch die geringe Signalrate im Dienstkanal nur zu einem Bruchteil ausgenützt wird.

Man hat daher seit längerem nach Lösungen gesucht, bei denen durch besondere Massnahmen derselbe Lichtwellenleiter sowohl für den Hauptübertragungspfad als auch für den Hilfskanal verwendet werden kann. Von solchen Lösungen sind dabei diejenigen besonders interessant, bei denen der Hilfskanal ohne Unterbrechung des Hauptübertragungspfads benutzt werden kann. So ist z.B. vorgeschlagen worden, einen unabhängigen Hilfskanal dadurch zu realisieren, dass die entsprechenden Informationen durch Modulation der Taktfrequenz übertragen werden (Electronics Letters 16 (16), Juli 1980, S. 624–626).

Ein anderer Vorschlag betrifft die Analogübertragung durch Amplituden- oder Frequenzmodulation in einem unterhalb des Verkehrsbandes liegenden Frequenzbereich (Philips Telecommunication Review 40 (2), Juli 1982, S. 79–86).

Solche «analogen» Hilfskanäle erfordern jedoch eine aufwendige Signalaufbereitung (Modulation, Demodulation), bedingen Änderungen und Eingriffe am optischen Sender und Empfänger und beeinflussen nachteilig die Übertragungsqualität im Hauptübertragungspfad.

Es ist daher in einem Artikel von K.W. Cattermole und W.D. Grover, «Optical Line Codes Bearing Ancillary Channels», IEE Colloquium on Data Transmission Codes, London Nov. 1980, vorgeschlagen worden, die Redundanz der bei der optischen Datenübertragung verwendeten Leitungscodes auszunützen, um durch Modifikation ausgewählter Bitmuster des Datenstroms im Hauptübertragungspfad Informationen in binärer Form zu übertragen, wobei eine Informationseinheit durch die Anwesenheit oder Abwesenheit einer Modifikation dargestellt wird («digitaler» Hilfskanal).

Als ausgewählte Bitmuster (SOP: Signalling Opportunity Pattern) werden solche Bitmuster verwendet, die im vorliegenden Datenstrom häufig genug auftreten und auf einfache Weise in solche modifizierten Bitmuster umgewandelt werden können, die im ursprünglichen Datenstrom nicht vorkommen und daher auf der Empfängerseite leicht detektiert werden können.

Ausgehend von einem Übertragungssystem, an dessen elektrischen Schnittstellen die Daten in einem pseudo-ternären Bipolar-Code vorliegen und in dem diese Daten für die optische Übertragung in den redundanten, binären Leitungscode 2 AMI (Alternate Mark Inversion) umgesetzt werden, geben Cattermole und Grover als ausgewählte Bitmuster (SOP) die Sequenzen 1011 und 0100 an, denen als modifizierte Bitmuster die Sequenzen 1111 und 0000 zugeordnet werden.

Die Nützlichkeit der angegebenen Bitmuster ist auf Übertragungssysteme beschränkt, in denen die speziellen vorausgesetzten Codes verwendet werden.

Ein anderes Lichtwellenleitersystem mit einer Übertragungsrate von etwa 2 bzw. 8 Mbit/s, wie es in der Druckschrift telcom report 6 (1983), Beiheft «Nachrichtenübertragung mit Licht», S. 127–132 beschrieben ist, geht aus von Schnittstellensignalen, die gemäss der CCITT-Empfehlung G. 703, Annex A, im sogenannten HDB-3-Code (High Density Bipolar) codiert sind und für die optische Übertragung in den MCMI-Code (Modified Coded Mark Inversion) umgesetzt werden.

Lichtwellenleitersysteme der zuletzt beschriebenen Art spielen für die Digitalsignalübertragung eine zunehmend wichtige Rolle.

Für diese Systeme ist in der FR-A 2 535 556 (ähnlich auch in der EP-A 0 090 728) das Konzept eines digitalen Hilfskanals vorgeschlagen worden, bei dem die Hilfskanaldaten laufend mittels einer Modifikation (entspricht einer «1») bzw. Nicht-Modifikation (entspricht einer «0») eines einzigen ausgewählten Bitmusters übertragen werden.

Da bei diesem Hilfskanal auch die Nicht-Modifikation zur Informationsübertragung herangezogen wird, können Ausfälle im Hilfskanal nicht eindeutig festgestellt werden.

Aufgabe der vorliegenden Erfindung ist es daher, ein Verfahren anzugeben, mit dem das Konzept eines sicheren digitalen Hilfskanals für Lichtwellenleitersysteme mit HDB-3/MCMI-Codeumsetzung verwirklicht werden kann.

Die Aufgabe wird bei einem Verfahren der eingangs genannten Art durch die Merkmale aus dem Kennzeichen des Anspruchs 1 gelöst.

Das erfindungsgemässe Verfahren zeichnet sich durch die folgenden Vorteile aus:

- die unmodifizierten Bitmuster 110011 und 001100 treten relativ häufig auf (bei statistischen Daten mit einer Wahrscheinlichkeit $p = 1/8$), so dass der Hilfskanal eine ausreichend hohe Kapazität besitzt;
- die entsprechenden modifizierten Bitmuster 011011, 100111, 101101, 001001, 000110 und 010010 sind die kürzesten Sequenzen, die im MCMI-codierten Datenstrom auf der Empfängerseite ohne Synchronisation wieder eindeutig als Modifikation detektiert werden können, weil sie im ursprünglichen Datenstrom nicht auftreten können;
- die Modifikationen verursachen keinen zusätzlichen DC-Anteil, weil das Verhältnis von «1» zu «0» durch die Modifikationen nicht verändert wird;
- die laufende digitale Summe (RDS, Running Digital Sum) wird durch die Modifikation nicht beeinträchtigt, so dass eine Bitfehlermessung im MCMI-codierten Datenstrom mittels der RDS weiterhin möglich ist; und
- die ausgewählten Bitmuster treten insbesondere auch im von der CCITT festgelegten AIS (Alarm Indication Signal) auf, das einer kontinuierlichen Folge von binären «1» entspricht, so dass auch während der Aussendung eines AIS die Übertragung im Hilfskanal gesichert ist.

Die Anwendung des erfindungsgemässen Verfahrens in einem Lichtwellenleitersystem, in welchem Daten unter Zwischenschaltung einer HDB-3- nach MCMI-Codeumsetzung zwischen zwei Leitungsendgeräten über zwei Lichtwellenleiter mit wenigstens einem Zwischenregenerator in zwei entgegengesetzten Richtungen übertragen werden, sieht vor, dass die jeweiligen digitalen Hilfskanäle zur Fernüberwachung des Systems und insbesondere der Zwischenregeneratoren verwendet werden.

Diese Anwendung weist ebenfalls erhebliche Vorteile auf:

- für die Telemetriedaten der Fernüberwachung existiert in jeder Richtung ein von Leitungsendgerät zu Leitungsendgerät durchgehender «transparenter» Hilfskanal, der wie der Hauptübertragungspfad durch alle Zwischenregeneratoren ungehindert hindurchläuft;
- die Telemetriedaten können mittels üblicher Digitalschaltungen in einfacher Weise in den MCMI-codierten Datenstrom ein- und wieder ausgeblendet werden;

- da die Telemetriedaten als modifizierte Bitmuster im Hauptdatenstrom untergebracht sind, sind keine Eingriffe in die optischen Sender und Empfänger nötig;
- der digitale Hilfskanal hat keine Auswirkungen auf die Übertragungsqualität im Hauptübertragungspfad;
- beim Ausfall eines Zwischenregenerators oder Unterbruch eines Lichtwellenleiters bleibt die Fernüberwachung bis zum letzten Zwischenregenerator vor der Fehlerstelle intakt, so dass eine eindeutige Lokalisierung des Fehlers möglich ist;
- beim Ausfall des Datensignals im Hauptübertragungspfad kann ohne Schwierigkeiten das dann ausgesandte AIS als Träger benutzt werden; und
- alle Baugruppen lassen sich in digitaler Schaltungstechnik realisieren.

Die Erfindung soll nun nachfolgend im Zusammenhang mit der Zeichnung anhand von Ausführungsbeispielen näher erläutert werden. Es zeigen:

Fig. 1 das Blockschaltbild eines optischen Übertragungssystems mit digitalem Hilfskanal nach dem Stand der Technik;

Fig. 2 das Beispiel einer Bitfolge mit den beim erfindungsgemässen Verfahren verwendeten Bitmustern in modifizierter und unmodifizierter Form;

Fig. 3 das Blockschaltbild eines Lichtwellenleitersystems für die Digitalsignalübertragung nach dem Stand der Technik;

Fig. 4 das Ausführungsbeispiel eines ersten Leitungsendgeräts für die Anwendung des erfindungsgemässen Verfahrens;

Fig. 5 das Ausführungsbeispiel eines entsprechenden Zwischenregenerators für die Anwendung des erfindungsgemässen Verfahrens;

Fig. 6 das Ausführungsbeispiel eines zweiten Leitungsendgeräts für die Anwendung des erfindungsgemässen Verfahrens;

Fig. 7 das System einer Zweiweg-Fernüberwachung in einem Lichtwellenleitersystem unter Anwendung des erfindungsgemässen Verfahrens.

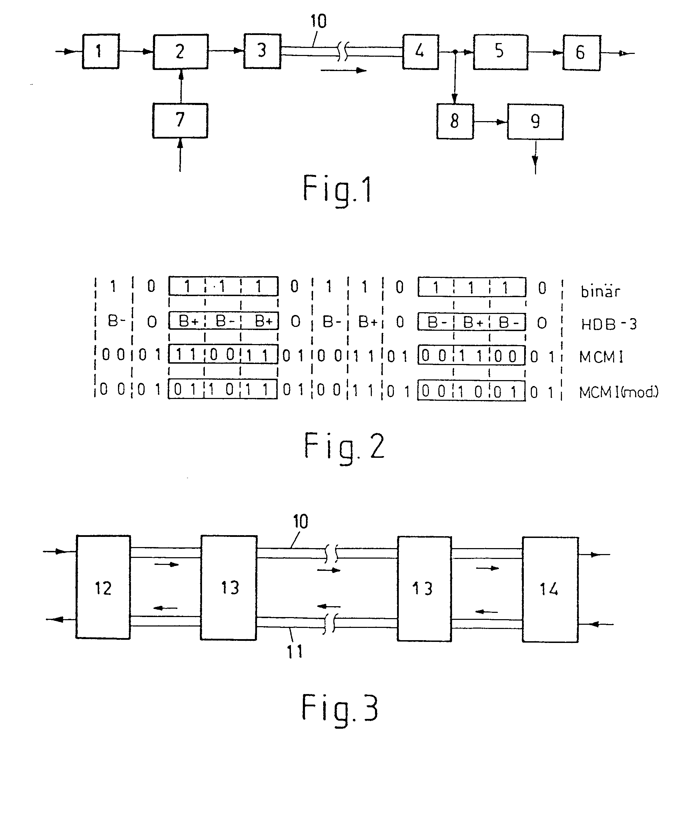

In Fig. 1 ist ein bekanntes optisches Übertragungssystem mit einem digitalen Hilfskanal im Blockschaltbild dargestellt. Auf der linken Senderseite des Systems werden anfallende Daten, die in einem pseudo-ternären Bipolar-Code vorliegen, in einem Leitungscodierer 1 in redundanten, binären Leitungscode (z. B. AMI) umgesetzt. Der leitungscodierte Datenstrom gelangt über einen Zusatzcodierer 2, dessen Funktion im weiteren Verlauf noch eingehender beschrieben wird, auf einen optischen Sender 3, der die elektrischen in optische Signale umwandelt und über einen Lichtwellenleiter 10 an einen optischen Empfänger 4 übermittelt, der die optischen in elektrische Signale zurückverwandelt und über einen Rückwandler 5 an einen Leitungsdecodierer 6 weitergibt, der die Rückumsetzung vom Leitungscode in den Bipolar-Code vornimmt.

Der Lichtwellenleiter 10, der optische Sender 3 und Empfänger 4 sowie der Leitungscodierer 1 und Leitungsdecodierer 6 bilden den Hauptübertragungspfad für den Haupt-Datenstrom.

Die Redundanz des verwendeten Leitungscodes hat nun zur Folge, dass im Datenstrom des Hauptübertragungspfads bestimmte Bitmuster nicht auftreten können. Wird daher durch den Zusatzcodierer 2 auf der Senderseite ein solches Bitmuster in den Datenstrom eingefügt, kann es auf der Empfängerseite mit einem entsprechenden Zusatzdecodierer 8, der den Datenstrom fortlaufend überwacht, detektiert werden.

Wird weiterhin ein im Datenstrom häufig vorkommendes Bitmuster gleichen Umfangs ausgewählt und diesem ausgewählten Bitmuster als Modifikation ein nicht vorkommendes Bitmuster der beschriebenen Art zugeordnet, lässt sich eine binäre Information dadurch übertragen, dass anstelle des ausgewählten Bitmusters seine zugeordnete Modifikation im Datenstrom übermittelt wird.

Auf diese Weise wird in bekannter Art ein digitaler Hilfskanal realisiert, der über den Zusatzcodierer 2, den optischen Sender 3 und Empfänger 4, den Lichtwellenleiter 10 und den Zusatzdecodierer 8 läuft. Um Auswirkungen der Modifikationen auf die Weiterverarbeitung der Daten auszuschliessen, ist es zweckmässig, auf der Empfängerseite den Rückwandler 5 vorzusehen, der jede Modifikation wieder durch das zugeordnete ausgewählte Bitmuster des ursprünglichen Datenstroms ersetzt.

Weiterhin ist es zweckmässig, am Ein- und Ausgang des digitalen Hilfskanals jeweils einen Zwischenspeicher 7 und 9 (Datenbuffer) vorzusehen, um die über den Hilfskanal laufenden Daten zwischenzuspeichern und bei Bedarf zur Übermittlung abzurufen, wenn eines der unregelmässig im Datenstrom auftretenden ausgewählten Bitmuster ansteht.

Dem erfindungsgemässen Verfahren liegt ebenfalls ein System der in Fig. 1 dargestellten Art zugrunde. Im Unterschied zu dem bekannten Verfahren wird hier jedoch ein im HDB-3-Code codierter Datenstrom verarbeitet, der für die optische Übertragung in einen MCMI-Code umgesetzt wird.

Die einzelnen Schritte dieser Umsetzung lassen sich, ausgehend von einer beispielhaften binären Ausgangsfolge, anhand der in Fig. 2 wiedergegebenen Tabelle erläutert.

In der oberen Reihe der Tabelle ist eine binäre Ausgangsfolge von Nullen und Einsen dargestellt, wie sie sich z.B. als Ausschnitt aus einem PCM-codierten Sprachsignal ergibt. Diese Ausgangsfolge führt bei der Umsetzung in den HDB-3-Code zu einer Folge von 3 Werten B+, B– und 0, die in der darunterliegenden Reihe der Tabelle wiedergegeben ist. Die weitere Umsetzung vom pseudoternären HDB-3-Code in den MCMI-Leitungscode ordnet jedem (B+)-Wert eine Folge von zwei Einsen, jedem (B–)-Wert eine Folge von zwei Nullen und jedem Wert 0 eine Folge von einer Null und einer Eins zu. Die resultierende Bitfolge mit der verdoppelten Bitrate und entsprechender Redundanz ist in der dritten Reihe der Tabelle wiedergegeben.

Als ausgewählte Bitmuster dieses MCMI-codierten Datenstroms werden nun nach der Erfindung die beiden eingerahmten Sequenzen 110011 und 001100 verwendet, die jeweils einer Sequenz von drei Einsen in der binären Ausgangsfolge entsprechen.

Der einen Sequenz 110011 wird wahlweise eine der drei Sequenzen 011011, 100111 und 101101, der anderen Sequenz 001100 wahlweise eine der Sequenzen 001001, 000110 und 010010 als Modifikation zugeordnet. In der Tabelle der Fig. 2 sind als Modifikationen beispielhaft die beiden Bitmuster 011011 und 001001 ausgewählt, so dass sich der modifizierte Datenstrom (MCMI (mod.)) in der unteren Reihe der Tabelle ergibt, wenn die eingerahmten Sequenzen durch ihre Modifikationen ersetzt werden. Ähnliche Datenströme resultieren bei Anwendung der anderen möglichen Modifikationen.

Die binäre «1» einer Informationseinheit wird nun dadurch über den digitalen Hilfskanal übertragen, dass z.B. ein ausgewähltes Bitmuster vom Typ 110011 im Datenstrom durch eine der drei genannten Modifikationen ersetzt wird. Entsprechend wird die binäre «0» dadurch übertragen, dass ein ausgewähltes Bitmuster des anderen Typs 001100 im Datenstrom durch eine der drei ihm zugeordneten Modifikationen ersetzt wird. Selbstverständlich können die Rollen der Bitmuster auch vertauscht werden, so dass der binären «1» das ausgewählte Bitmuster 001100 mit seinen Modifikationen zugeordnet ist.

Eine bevorzugte Anwendung dieses Übertragungsverfahrens mittels eines digitalen Hilfskanals ergibt sich insbesondere bei der Fernüberwachung eines optischen Übertragungssystems, wie es in Fig. 3 wiedergegeben ist.

Ein solches Übertragungssystem enthält zwei Leitungsendgeräte 12 und 14, in denen die ankommenden elektrischen Signale in optische Signale umgewandelt werden und umgekehrt. Zwischen den beiden Leitungsendgeräten 12 und 14 werden die Datenströme über zwei Lichtwellenleiter 10 und 11 in entgegengesetzten Richtungen übertragen.

Zum Ausgleich von Dämpfungsverlusten in den Lichtwellenleitern 10 und 11 sind auf der Übertragungsstrecke je nach Abstand der Leitungsendgeräte 12 und 14 ein oder mehrere Zwischenregeneratoren 13 (repeater) vorgesehen, die den Datenstrom regenerieren. Das erfindungsgemässe Verfahren wird nun eingesetzt, um von einem der Leitungsendgeräte 12 und 14 aus mit den Zwischenregeneratoren 13 und dem anderen der Leitungsendgeräte über die digitalen Hilfskanäle der beiden Lichtwellenleiter 10 und 11 Befehle und Fernüberwachungs-(Telemetrie-)-Daten auszutauschen, ohne dass der Betrieb auf dem Hauptübertragungspfad unterbrochen werden muss (sog. in-service oder on-line monitoring).

Gemäss einem bevorzugten Ausführungsbeispiel wird dabei jedem Zwischenregenerator 13 und dem zu überwachenden Leitungsendgerät jeweils eine Adresse zugeordnet. Überwacht nun z. B. das Leitungsendgerät 12 den Betrieb des übrigen Systems, so werden von diesem überwachenden Leitungsendgerät 12 aus nacheinander die Zwischengeneratoren 13 und das zu überwachende Leitungsendgerät 14 über den digitalen Hilfskanal des Lichtwellenleiters 10 durch Adressierung angerufen.

Die jeweils angerufene Funktionseinheit schickt dann die entsprechenden Telemetrie-Daten über den digitalen Hilfskanal des zweiten Lichtwellenleiters 11 an das überwachende Leitungsendgerät 12 zurück. Für eine kontinuierliche Fernüberwachung wird diese serielle Abfrage der Zwischengeneratoren 13 und des zu überwachenden Leitungsendgeräts 14 zyklisch wiederholt.

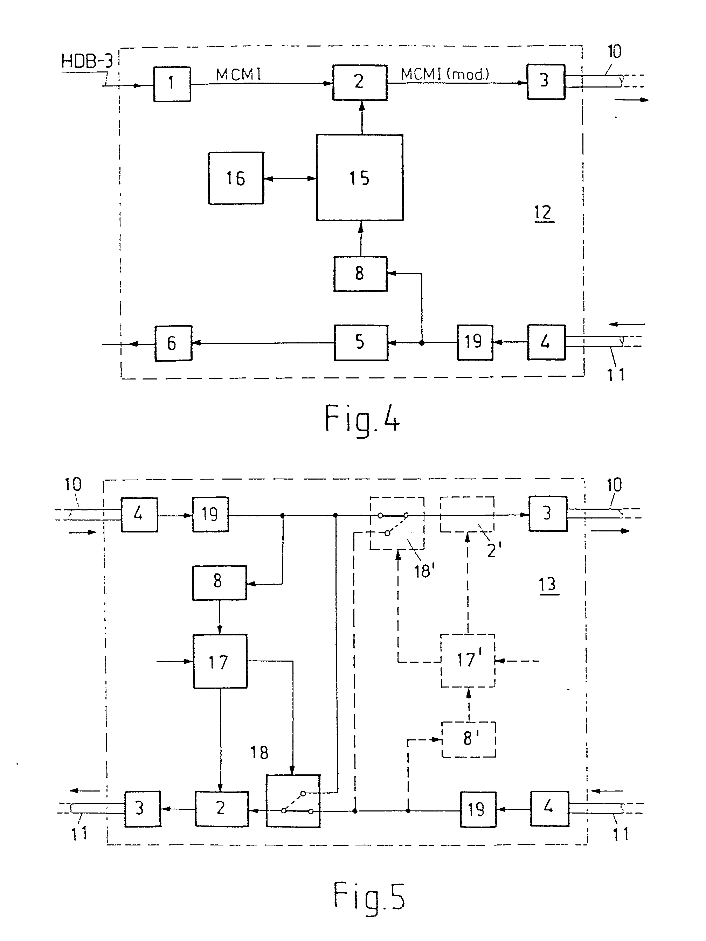

Das Blockschaltbild eines bevorzugten Ausführungsbeispiels des für die Fernüberwachung ausgelegten Leitungsendgeräts 12 ist in Fig. 4 dargestellt.

Die von einer elektrischen Schnittstelle im HDB-3-Code ankommenden Daten werden innerhalb des Leitungsendgeräts 12 in an sich bekannter Weise durch den Leitungscodierer 1 in den MCMI-Leitungscode umgesetzt und in dem optischen Sender 3 in optische Signale umgewandelt und in den abgehenden Lichtwellenleiter 10 eingespeist. Der optische Sender 3 enthält z. B. eine geregelte Laserdiode, die ein Lichtsignal mit konstantem Hub abgibt. Technische Einzelheiten eines solchen Senders können beispielsweise der bereits zitierten Druckschrift telcom report 6 (1983) Beiheft «Nachrichtenübertragung mit Licht», S. 129 ff., entnommen werden.

In analoger Weise gelangen die von der ankommenden Lichtleitfaser 11 abgegebenen optischen Signale auf den optischen Empfänger 4, der z. B. mit einer Avalanche-Photodiode (APD) ausgestattet ist und dessen technische Ausführung ebenfalls aus der oben erwähnten Druckschrift bekannt ist.

Die vom optischen Empfänger 4 erzeugten elektrischen Datensignale werden vorzugsweise in einer nachfolgenden Regeneratorschaltung 19 in ihrer Impulsform regeneriert im Leitungsdecodierer 6 vom MCMI-Leitungscode in den HDB-3-Code rückumgesetzt und an eine nicht dargestellte empfangsseitige elektrische Schnittstelle abgegeben.

Zum Aufbau der beiden digitalen Hilfskanäle für die Fernüberwachung ist zwischen dem Leitungscodierer 1 und dem optischen Sender 3 ein Zusatzcodierer 2 und zwischen dem optischen Empfänger 4 und dem Leitungsdecodierer 6 ein entsprechender Zusatzdecodierer 8 angeordnet.

Der Zusatzcodierer 2 ist für die bereits beschriebene Modifizierung der ausgewählten Bitmuster des MCMI-codierten Datenstroms ausgelegt. Zu diesem Zweck wird z. B. die ankommende Bitfolge des Datenstroms durch ein Schieberegister geschoben und der Registerinhalt in jedem Taktschritt mit den Inhalten zweier Festspeicher verglichen, in welchen die ausgewählten Bitmuster 110011 und 001100 abgespeichert sind.

Soll nun eine binäre «1» über den digitalen Hilfskanal übertragen werden, wird eines der beiden ausgewählten Bitmuster, sobald es durch den Vergleich im Datenstrom detektiert worden ist, durch eine seiner jeweils drei zugeordneten Modifikationen ersetzt.

Soll dagegen eine binäre «0» übertragen werden, wird das andere der beiden ausgewählten Bitmuster modifiziert.

Auf diese Weise kann jedesmal, wenn eines der ausgewählten Bitmuster im Datenstrom auftaucht, eine Informationseinheit über den digitalen Hilfskanal übertragen werden.

Der Zusatzdecodierer 8 überwacht den ankommenden modifizierten MCMI-Datenstrom, der sowohl die ausgewählten Bitmuster (bei fehlender Übertragung) als auch die normalerweise nicht vorkommenden Modifikationen (bei der Übertragung einer binären «1» oder «0») enthält, und detektiert diese Bitmuster.

Für jede detektierte Modifikation des einen ausgewählten Bitmusters gibt der Zusatzdecodierer 8 eine «0» an seinem Ausgang ab, für jede detektierte Modifikation des anderen entsprechend eine «1», so dass die auf dem digitalen Hilfskanal übertragenen Informationen wieder aus dem Datenstrom extrahiert werden.

Die Fernüberwachung wird von einer Fehlerortungseinheit 15 (FLU: Fault Location Unit) gesteuert, die mit einer Ein- und Ausgabeeinheit (16) verbunden ist. Die Fehlerortungseinheit 15 fordert im Normalfall zyklisch und in einer vorbestimmten Reihenfolge (seriell) alle Zwischenregeneratoren 13 und das gegenüberliegende Leitungsendgerät 14 durch direkte Adressierung über den zum Lichtwellenleiter 10 gehörenden digitalen Hilfskanal auf, die anfallenden Alarme und Fehlermeldungen in Form eines Telegramms über den zum Lichtwellenleiter 11 gehörenden digitalen Hilfskanal an die Fehlerortungseinheit 15 zurückzusenden.

Alle Zwischenregeneratoren 13 und das überwachte Leitungsendgerät hören den durch den Zusatzcodierer 2 im Leitungsendgerät 12 modifizierten MCMI-Datenstrom ab und reagieren nur, wenn sie ihre eigene Adresse erkennen. Die Fehlerortungseinheit 15 wertet die vom Zusatzdecodierer 8 aus dem rückfliessenden Datenstrom extrahierten Telegramme aus und bringt entsprechende Meldungen auf der Ein- und Ausgabeeinheit 16 zur Anzeige.

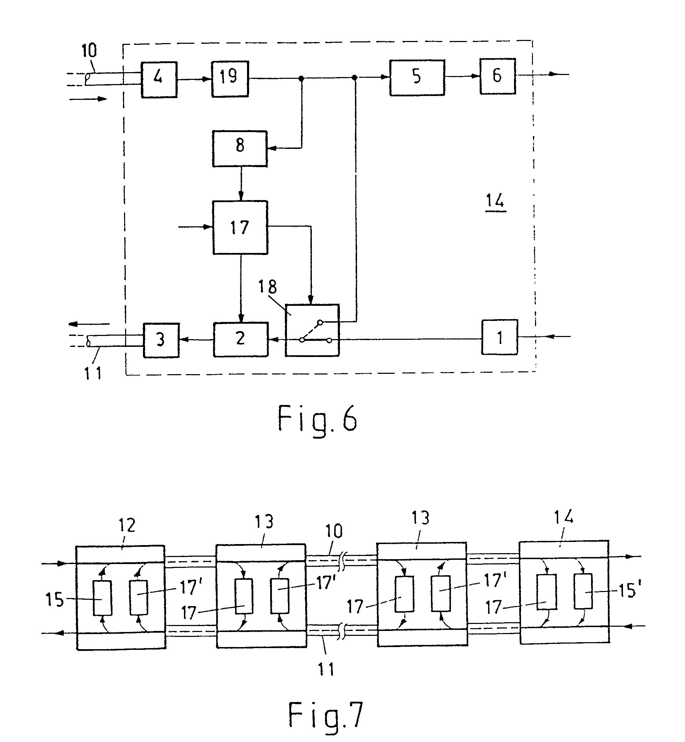

Ausführungsbeispiele der Zwischengeneratoren 13 und des überwachten Leitungsendgeräts 14 sind im Blockschaltbild in den Figuren 5 und 6 wiedergegeben. Der Zwischenregenerator 13 der Fig. 5 enthält neben den bereits erläuterten Funktionsblöcken der optischen Sender 3, der optischen Empfänger 4, der Regeneratorschaltungen 14, des Zusatzcodierers 2 und des Zusatzdecodierers 8 eine Überwachungseinheit 17.

Die Überwachungseinheit 17 sammelt die wichtigen Betriebsdaten aus dem Zwischenregenerator 13. Wenn der Zusatzdecodierer 8 im Datenstrom des Lichtwellenleiters 10 die Adresse «seines» Zwischenregenerators detektiert, werden die mit der Adresse zusammenhängenden Befehle an die Überwachungseinheit 17 weitergeleitet. Innerhalb des normalen Abfragezyklus sendet dann die Überwachungseinheit die Betriebsdaten in Form eines Telegramms über den Zusatzcodierer 2 und den digitalen Hilfskanal des Wellenleiters 11 an die Fehlerortungseinheit 15 im Leitungsendgerät 12 ab.

Weiterhin ist es möglich, über einen speziellen Befehl, der in der Überwachungseinheit 17 erkannt wird, einen sogenannten Schleifenschluss zu befehlen. Die Überwachungseinheit des angewählten Zwischenregenerators steuert dann einen Schleifenschalter 18 an, der die beiden entgegenlaufenden Datenleitungen innerhalb des angewählten Zwischenregenerators kurzschliesst, so dass eine vom überwachenden Leitungsendgerät ausgehende geschlossene Leitungsschleife gebildet wird. Auf diese Weise können von dem Leitungsendgerät aus die einzelnen Abschnitte des Übertragungssystems sukzessive auf ihre Funktionstüchtigkeit hin überprüft werden.

Analog zum Zwischenregenerator 13 der Fig. 5 ist auch das überwachte Leitungsendgerät 14 der Fig. 6 mit einer Überwachungseinheit 17 und einem Schleifenschalter 18 ausgestattet, welche dieselben Funktionen wahrnehmen wie in einem Zwischenregenerator.

Gemäss einer bevorzugten Ausgestaltung des Systems sind nun beide Leitungsendgeräte 12 und 14 identisch aufgebaut, d.h., das Leitungsendgerät 12 der Fig. 4 enthält zusätzlich eine Überwachungseinheit und einen Schleifenschalter, die vom anderen Leitungsendgerät 14 aus angewählt und betätigt werden können.

Zu diesem Zweck ist auch das andere Leitungsendgerät 14 mit einer Fehlerortungseinheit ausgerüstet, so dass die Fernüberwachung des Übertragungssystems gleichberechtigt und wahlweise von jedem der Leitungsendgeräte 12 und 14 aus vorgenommen werden kann.

Entsprechend sind bei dieser Ausgestaltung die Zwischenregeneratoren 13 gemäss Fig. 5 mit einer weiteren Überwachungseinheit 17', einem weiteren Schleifenschalter 18' und weiteren Zusatzcodierer 2' und Zusatzcodierer 8' ausgerüstet, die in der Figur gestrichelt eingezeichnet sind.

Die Verschiedenen Schleifen der Datenströme für eine doppelseitige Fernüberwachung der beschriebenen Art sind in der Fig. 7 veranschaulicht. Die Fehlerortungseinheit 15 des einen Leitungsendgeräts 12 arbeitet bei dem einen Überwachungsmodus mit allen Überwachungseinheiten 17 in den Zwischenregeneratoren 13 und des «passiven», überwachten Leitungsendgeräts 14 zusammen.

Die Fehlerortungseinheit 15' des anderen Leitungsendgeräts arbeitet mit allen Überwachungseinheiten 17' in den Zwischengeneratoren 13 und dem in diesem Fall passiven Leitungsendgerät 12 zusammen.

Insgesamt wird durch das erfindungsgemässe Verfahren die Möglichkeit geschaffen, mit vergleichsweise geringem Aufwand auf der Basis der Digitaltechnik in einem Lichtwellenleitersystem Telemetriedaten über einen digitalen Hilfskanal zu übermitteln und auf diese Weise eine wirkungsvolle Fernüberwachung ohne Betriebsunterbrechung zu realisieren.

## Patentansprüche

1. Verfahren zur zusätzlichen Übertragung von Informationen über einen digitalen Hilfskanal in einem Lichtwellenleitersystem für die Digitalsignalübertragung, in welchem System elektrische Signale, welche in einem pseudo-ternären Bipolar-Code codiert sind, in einen redundanten, binären Leitungscode umgesetzt und in umgesetzter Form über einen Lichtwellenleiter übertragen werden, und bei welchem Verfahren jeweils eine Informationseinheit der Informationen durch Modifikation eines ausgewählten Bitmusters aus dem im Leitungscode vorliegenden Datenstrom übertragen wird, wobei der pseudo-ternäre Bipolar-Code der HDB-3-Code ist, und als Leitungscode der MCMI-Code verwendet wird, dadurch gekennzeichnet, dass als ausgewählte Bitmuster die Bitsequenzen 110011 und 001100 verwendet werden, dass der Bitsequenz 110011 als Modifikation wenigstens eine der Bitsequenzen 011011, 100111 und 101101, dass der Bitsequenz 001100 als Modifikation wenigstens eine der Bitsequenzen 001001, 000110 und 010010 zugeordnet werden und dass eine binäre «1» einer Informationseinheit durch Modifikation einer der Bitsequenzen und eine binäre «0» durch Modifikation der anderen Bitsequenz übertragen wird.

2. Verfahren nach Anspruch 1, dadurch gekennzeichnet, dass die Informationen vor und nach der Übertragung über den digitalen Hilfskanal jeweils in einem Zwischenspeicher (7, 9) gespeichert werden.

3. Anwendung des Verfahrens nach Anspruch 1 für die Fernüberwachung eines optischen Übertragungssystems, in welchem Daten zwischen zwei Leitungsendgeräten (12, 14) über wenigstens zwei Lichtwellenleiter (10, 11) in entgegengesetzten Richtungen übertragen werden, und zum Ausgleich der Dämpfungsverluste innerhalb der Strecke der Lichtwellenleiter (10, 11) wenigstens ein Zwischenregenerator (13) angeordnet ist, dadurch gekennzeichnet, dass der Zwischengenerator (13) während des Betriebs von wenigstens einem der Leitungsendgeräte (12) aus über einen digitalen Hilfskanal im einen Lichtwellenleiter (10) angewählt wird und Informationen bezüglich seines Betriebszustandes über einen digitalen Hilfskanal im anderen Lichtwellenleiter (11) an das Leitungsendgerät (12) zurücksendet.

4. Anwendung nach Anspruch 3, dadurch gekennzeichnet, dass jeder digitale Hilfskanal durch einen vor einem optischen Sender (3) angeordneten Zusatzcodierer (2, 2') und einen hinter einem optischen Empfänger (4) angeordneten Zusatzdecodierer (8, 8') aufgebaut wird.

5. Anwendung nach Anspruch 3, dadurch gekennzeichnet, dass jedem Zwischenregenerator (13) eine Adresse zugeordnet ist, dass in wenigstens einem Leitungsendgerät (12, 14) eine Fehlerortungseinheit (15, 15') vorgesehen ist, dass die Fehlerortungseinheit (15, 15') zyklisch und nacheinander alle Zwischenregeneratoren (13) durch direkte Adressierung anwählt und dass die angewählten Zwischenregeneratoren jeweils die anfallenden Betriebsdaten, Alarme und Fehlermeldungen in Form eines Telegramms an die Fehlerortungseinheit (15, 15') zurücksenden.

6. Anwendung nach Anspruch 5, dadurch gekennzeichnet, dass dem anderen Leitungsendgerät (14, 12) ebenfalls eine Adresse zugeordnet ist und dieses Leitungsendgerät zusammen mit den Zwischenregeneratoren (13) zyklisch angewählt und abgefragt wird.

7. Anwendung nach Anspruch 5, dadurch gekennzeichnet, dass der Fehlerortungseinheit (15, 15') eine Ein- und Ausgabeeinheit (16) zugeordnet ist, von der aus die Fernüberwachung eingeleitet werden kann und in der die anfallenden Informationen über den Betriebszustand des Systems zur Anzeige gebracht werden.

8. Anwendung nach Anspruch 5, dadurch gekennzeichnet, dass in beiden Leitungsendgeräten (12, 14) jeweils eine Fehlerortungseinheit (15, 15') und in den Zwischenregeneratoren jeweils zwei Überwachungseinheiten (17, 17') vorgesehen sind und die Fernüberwachung abwechselnd von beiden Fehlerortungseinheiten (15, 15') aus vorgenommen wird, wobei von einer Fehlerortungseinheit (15, 15') jeweils nur eine der Überwachungseinheiten (17, 17') jedes Zwischenregenerators (13) angewählt und abgefragt wird.

9. Anwendung nach Anspruch 8, dadurch gekennzeichnet, dass auch in jedem Leitungsendgerät (12, 14) eine Überwachungseinheit (17, 17') vorgesehen ist, die vom jeweils anderen Leitungsendgerät aus während der Überwachung angewählt und abgefragt wird.

10. Anwendung nach Anspruch 9, dadurch gekennzeichnet, dass in den Leitungsendgeräten (12, 14) und den Zwischenregeneratoren (13) Schleifenschalter (18, 18') vorgesehen sind, mittels welcher Schleifenschalter (18, 18') die Hauptübertragungspfade der beiden Lichtwellenleiter (10, 11) abschnittweise kurzgeschlossen werden können.

## Claims

1. Method for the additional transmission of information via a digital auxiliary channel in an optical waveguide system for digital signal transmission, in which system electric signals, which are coded in a pseudoternary bipolar code, are converted into a redundant, binary line code and are transmitted in converted form via an optical waveguide, and in which method in each case one information unit of the information is transmitted by modification of a signalling opportunity pattern from the data stream present in line code, the pseudo-ternary bipolar code being the HDB-3 code, and the MCMI code being used as line code, characterised in that the bit sequences 110011 and 001100 are used as signalling opportunity patterns, that at least one of the bit sequences 011011, 100111 and 10101 are allocated as modification to the bit sequence 110011, that at least one of the bit sequences 001001, 000110 and 010010 are allocated as modification to the bit sequence 001100, and that a binary «1» of an information unit is transmitted by modification of one of the bit sequences and a binary «0» is transmitted by modification of the other bit sequence.

2. Method according to Claim 1, characterised in that the information is in each case stored in a temporary memory (7, 9) before and after transmission via the digital auxiliary channel.

3. Application of the method according to Claim 1 to the remote monitoring of an optical transmission system in which data are transmitted in opposite directions between two line terminals (12, 14) via at least two optical waveguides (10, 11), and, for compensating the damping losses within the path of the optical waveguides (10, 11), at least one repeater (13) is arranged, characterised in that, during operation, the repeater (13) is selected by at least one of the line terminals (12) via a digital auxiliary channel in one optical waveguide (10) and sends information regarding its operational condition via a digital auxiliary channel in the other optical waveguide (11) back to the line terminal (12).

4. Application according to Claim 3, characterised in that each digital auxiliary channel is constructed by means of an additional encoder (2, 2'), which is arranged preceding an optical transmitter (3), and an additional decoder (8, 8') which is arranged after an optical receiver (4).

5. Application according to Claim 3, characterised in that an address is allocated to each repeater (13), that a fault location unit (15, 15') is provided in at least one line terminal (12, 14), that the fault location unit (15, 15') cyclically and successively selects all repeaters (13) by direct addressing, and that the repeaters selected in each case send the incoming operational data, alarm signals and error messages back to the fault location unit (15, 15') in the form of a message.

6. Application according to Claim 5, characterised in that an address is also allocated to the other line terminal (14, 12) and that this line terminal, together with the repeaters (13), is cyclically selected and polled.

7. Application according to Claim 5, characterised in that the fault location unit (15, 15') is allocated an input and output unit (16) from which the remote monitoring can be initiated and in which the incoming information concerning the operational condition of the system is displayed.

8. Application according to Claim 5, characterised in that in both line terminals (12, 14) in each case one fault location unit (15, 15') and in the repeaters in each case two monitoring units (17, 17') are provided and that the remote monitoring is alternately carried out from the two fault location units (15, 15'), in each case only one of the monitoring units (17, 17') of each repeater (13) being selected and polled by a fault location unit (15, 15').

9. Application according to Claim 8, characterised in that a monitoring unit (17, 17') is also provided in each line terminal (12, 14), which monitoring unit is selected and polled during the monitoring process by the respective other line terminal.

10. Application according to Claim 9, characterised in that in the line terminals (12, 14) and the repeaters (13), loop switches (18, 18') are provided by means of which loop switches (18, 18') the main transmission paths of the two optical waveguides (10, 11) can be shortcircuited section by section.

## Revendications

1. Procédé pour la transmission supplémentaire d'informations au moyen d'un canal auxiliaire numérique dans un système à guides d'ondes optiques pour la transmission de signaux numériques, étant entendu que dans le système, des signaux électriques, qui sont codés dans un code bipolaire pseudoternaire, sont convertis dans un code de ligne binaire redondant et transmis, dans la forme convertie, par l'intermédiaire d'un guide d'ondes optique, et que dans le procédé, une unité d'information des informations est transmise chaque fois par modification d'une configuration binaire sélectionnée du flux de données présent dans le code de ligne, le code bipolaire pseudoternaire étant le code HDB-3, et le code MCMI étant utilisé comme code de ligne, caractérisé en ce qu'à titre de configuration binaire sélectionnée, on utilise les séquences de bits 110011 et 001100, qu'à la séquence de bits 110011, à titre de modification, est attribuée au moins une des séquences de bits 011011, 100111 et 101101, qu'à la séquence de bits 001100, à titre de modification, est attribuée au moins une des séquences de bits 001001, 000110 et 010010 et qu'un «1» binaire d'une unité d'information est transmis par modification d'une des séquences de bits et un «0» binaire par modification de l'autre séquence de bits.

2. Procédé suivant la revendication 1, caractérisé en ce que les informations sont stockées, avant et après la transmission par l'intermédiaire du canal auxiliaire numérique, chaque fois dans une mémoire tampon (7, 9).

3. Utilisation du procédé suivant la revendication 1 pour la télésurveillance d'un système de transmission optique dans lequel des données sont transmises en sens opposés entre deux appareils de fin de ligne (12, 14) par l'intermédiaire d'au moins deux guides d'ondes optiques (10, 11) et, pour compenser les pertes d'affaiblissement sur la longueur des guides d'ondes optiques (10, 11), au moins un régénérateur intermédiaire (13) est prévu, caractérisée en ce que le régénérateur intermédiaire (13) est appelé, pendant le fonctionnement d'au moins un des appareils de fin de ligne (12), par l'intermédiaire d'un canal auxiliaire numérique, dans un guide d'ondes optique (10), et des informations concernant son état de fonctionnement sont renvoyées, par l'intermédiaire d'un canal auxiliaire numérique, dans un guide d'ondes optique (10), et des informations concernant son état de fonctionnement sont renvoyées, par l'intermédiaire d'un canal auxiliaire numérique, dans l'autre guide d'ondes optique (11) à l'appareil de fin de ligne (12).

4. Utilisation du procédé suivant la revendication 3, caractérisée en ce que chaque canal auxiliaire numérique est formé d'un codeur supplémentaire (2, 2') installé devant un émetteur optique (3) et d'un décodeur supplémentaire (8, 8') installé derrière un récepteur optique (4).

5. Utilisation suivant la revendication 3, caractérisée en ce qu'une adresse est attribuée à chaque régénérateur intermédiaire (13), que dans au moins un appareil de fin de ligne (12, 14) est prévue une unité de localisation des pannes (15, 15'), que l'unité de localisation des pannes (15, 15') appelle cycliquement et consécutivement tous les régénérateurs intermédiaires (13) par adressage direct et que les régénérateurs intermédiaires appelés renvoient chaque fois les données de fonctionnement produites, les alarmes et les messages de pannes produits sous la forme d'un télégramme à l'unité de localisation des pannes (15, 15').

6. Utilisation suivant la revendication 5, caractérisée en ce qu'une adresse est également attribuée à l'autre appareil de fin de ligne (14, 12) et cet appareil est appelé et interrogé cycliquement en même temps que les régénérateurs intermédiaires (13).

7. Utilisation suivant la revendication 5, caractérisée en ce qu'à l'unité de localisation des pannes (15, 15') est associée une unité d'entrée et de sortie (16) à partir de laquelle la télésurveillance peut également être amorcée et dans laquelle sont affichées les informations produites au sujet de l'état de fonctionnement du système.

8. Utilisation suivant la revendication 5, caractérisée en ce que les deux appareils de fin de ligne (12, 14) contiennent chacun une unité de localisation des pannes (15, 15'), et les régénérateurs intermédiaires contiennent chacun deux unités de surveillance (17, 17'), et la télésurveillance est assurée en alternance par les deux unités de localisation des pannes (15, 15'), étant entendu qu'une seule des unités de surveillance (17, 17') de chaque régénérateur intermédiaire (13) est chaque fois appelée et interrogée par une unité de localisation de pannes (15, 15').

9. Utilisation suivant la revendication 8, caractérisée en ce que chaque appareil de fin de ligne (12, 14) contient une unité de surveillance (17, 17') qui est appelée et interrogée chaque fois par l'autre appareil de fin de ligne pendant la surveillance.

10. Utilisation suivant la revendication 9, caractérisée en ce que les appareils de fin de ligne (12, 14) et les régénérateurs intermédiaires (13) contiennent des commutateurs de boucle (18, 18′) au moyen desquels les trajets de transmission principaux des deux guides d'ondes optiques (10, 11) peuvent être court-circuités par sections.

Fig.1

| | | | | | | | | | | | | | | | | | |
|---|---|---|---|---|---|---|---|---|---|---|---|---|---|---|---|---|---|
| 1 | 0 | 1 | 1 | 1 | 0 | 1 | 1 | 0 | 1 | 1 | 1 | 0 | binär |
| B- | 0 | B+ | B- | B+ | 0 | B- | B+ | 0 | B- | B+ | B- | 0 | HDB-3 |
| 0 0 | 0 1 | 1 1 | 0 0 | 1 1 | 0 1 | 0 0 | 1 1 | 0 1 | 0 0 | 1 1 | 0 0 | 0 1 | MCMI |
| 0 0 | 0 1 | 0 1 | 1 0 | 1 1 | 0 1 | 0 0 | 1 1 | 0 1 | 0 0 | 1 0 | 0 1 | 0 1 | MCMI(mod.) |

Fig.2

Fig.3

Fig.4

Fig.5

...

Fig. 6

Fig. 7